(19) Europäisches Patentamt

European Patent Office

Office européen des brevets

(11) **EP 0 734 155 B1**

(12) **EUROPEAN PATENT SPECIFICATION**

(45) Date of publication and mention
of the grant of the patent:
**08.03.2006 Bulletin 2006/10**

(51) Int Cl.:
*H04N 5/232* (2006.01)          *G03B 37/02* (2006.01)

(21) Application number: **95308792.1**

(22) Date of filing: **05.12.1995**

(54) **Frame-shift detecting device, apparatus for image pickup and video recording having a panoramic mode**

Bildverschiebungserkennungsvorrichtung, Bildaufnahme- und Videoaufzeichnungsapparat mit Panoramamodus

Dispositif de détection de déplacement de trame, appareil de prises de vues et d'enregistrement vidéo avec mode panoramique

(84) Designated Contracting States:
**DE ES FR GB NL**

(30) Priority: **20.03.1995 JP 6136495**

(43) Date of publication of application:
**25.09.1996 Bulletin 1996/39**

(73) Proprietor: **SHARP KABUSHIKI KAISHA**
**Osaka-shi,**
**Osaka-fu 545-0013 (JP)**

(72) Inventors:
• **Aramaki, Hiroshi**
**Yaita-shi,**
**Tochigi (JP)**
• **Satoh, Yoshinori**
**Yaita-shi,**
**Tochigi (JP)**

(74) Representative: **Brown, Kenneth Richard et al**
**R.G.C. Jenkins & Co.**
**26 Caxton Street**
**London SW1H 0RJ (GB)**

(56) References cited:
EP-A- 0 389 168          EP-A- 0 435 319
EP-A- 0 592 136          WO-A-94/05118
GB-A- 2 273 410          US-A- 5 233 417
US-A- 5 321 515

• PATENT ABSTRACTS OF JAPAN vol. 94, no. 012 & JP-A-06 350887 (TSUNEAKI HIBI), 22 December 1994,
• PATENT ABSTRACTS OF JAPAN vol. 018, no. 535 (E-1615), 12 October 1994 & JP-A-06 189180 (TSUNEAKI HIBI), 8 July 1994,
• PATENT ABSTRACTS OF JAPAN vol. 95, no. 001 & JP-A-07 030802 (NIKON CORP), 31 January 1995,
• PATENT ABSTRACTS OF JAPAN vol. 017, no. 448 (P-1594), 17 August 1993 & JP-A-05 100335 (CANON INC), 23 April 1993,
• PATENT ABSTRACTS OF JAPAN vol. 014, no. 002 (E-868), 8 January 1989 & JP-A-01 251962 (CANON INC), 6 October 1989,

EP 0 734 155 B1

**Description**

BACKGROUND OF THE INVENTION

(1) Field of the Invention

The present invention relates to a frame-shift detecting device for detecting a relative movement or shift of the image and a shift-angle of the frame during video picture-taking. The present invention further relates to a video-recording apparatus which is capable of recording video signals of two frames spatially continuous to each other and of displaying the frame-shift quantity using the frame-shift detecting device.

(2) Description of the Prior Art

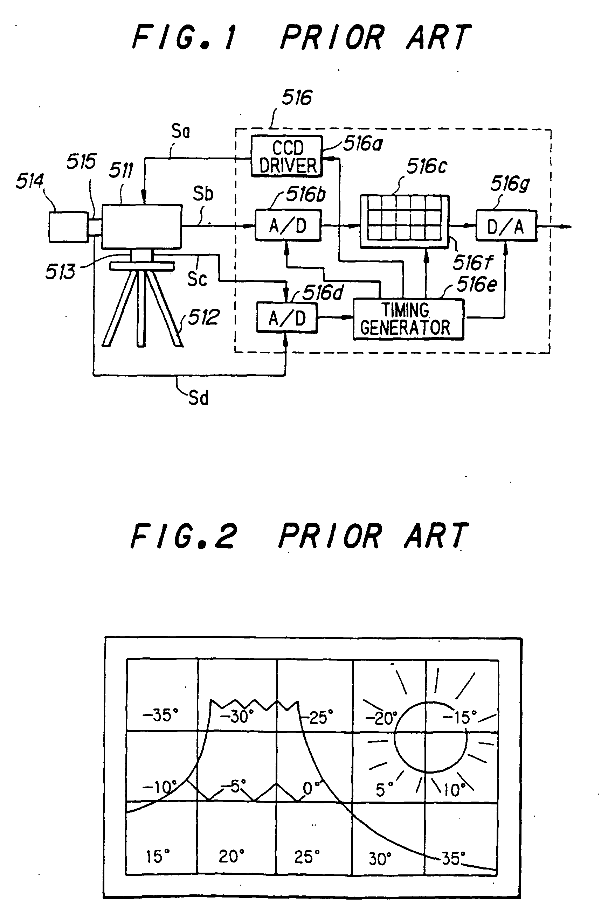

In the beginning, "An Image Display Apparatus" disclosed in Japanese Patent Application Laid-Open Sho 64 No. 29,064 will be described as a first prior art example. Fig.1 is a block diagram showing the prior art apparatus; and Fig.2 is a view showing a typical example of a display frame in this conventional apparatus. In Fig.1, a television camera 511 (to be referred to as a video camera) using solid-state imaging device such as CCDs (Charge-Coupled Devices) etc., is mounted on a tripod 512, rotatably in horizontal and vertical directions. The video camera is added with a pendulum detector 513 for gaining information on the panned-angle of the video camera.

The video camera has a replaceable lens 514. Any of the lenses used is a zoom lens, that is, the view-field angle is variable. Accordingly, the camera has a view-field angle detector 515 in order to detect the view-field information. In a panorama image processing unit 516, a CCD driver 516a generates a CCD activating signal Sa and sends it to the video camera 511. In response to the signal Sa, the video cameral 511 outputs a video signal Sb, pendulum information Sc and view-field angle information Sd to the respective parts of the panorama image processing unit 516.

The video signal Sb is converted into the digital signal in an A/D (analog/digital) converter 516b, and the thus converted signal is supplied to a panorama memory circuit 516c. The pendulum information Sc as well as the view-field angle information Sd are converted into digital signals by an A/D converter 516d and the digital signals are supplied to a timing generator 516e. The A/D converters 516b and 516d, in response to respective clock signals from the timing generator 516e, effect A/D conversion.

The timing generator 516e outputs a controlling signal to a memory control circuit 516f so that a picked up image in each lens view-field angle may be written in the panorama memory circuit 516c or may be loaded therefrom. A D/A (digital/analog) converter 516g converts the digital image signal read out from the memory 516c into the analog signal and supplies the obtained signal as panorama signal to an indicator (not shown).

The panorama memory circuit 516c successively stores frames of the video signal Sb from the video camera 511, based on the pendulum information Sc and the view-field angle information Sd. When the panorama memory circuit 516c is changed into the readout mode, in response to the control signal from the timing generator 516e, the video signal stored is read out in a prescribed order by the memory control circuit 516f.

Next, the operation will be described. Referring to Fig.2, if the image-pickup direction by the video camera 511 is changed, for example, in the horizontal direction, the pendulum information Sc and the lens view-field angle information Sd relative to a reference direction (for example, the central angle direction of the whole pendulum) of the video camera 511 are detected and outputted by detectors 513 and 515, respectively. Here, the view-field of lens is variable owing to the zoom function of the lens 514.

The timing generator 516e, as using the detected pendulum information Sc and the lens view-field angle information Sd, samples the pendulum information Sc for each view-field angle and controls the memory control circuit 516f to store the image signal in association with the state of the pendulum sampled. That is, as the pendulum information changes by the angle of the view-field, the memory control circuit 516f is controlled so that the video signal for the frame in the state of the pendulum may be stored.

The readout from the panorama memory circuit 516c is effected in such a manner, for example, as shown in Fig.2, that a panoramic video-image which corresponds to five frames in horizontal direction can be displayed by a single horizontal scan and horizontal lines are successively changed over to complete the panoramic image in the same manner. In Figs.1 and 2 show the example in which a lens having a view-field of 5° is used. That is, image frames obtained by 5° in the horizontal direction are inputted into the panorama memory circuit 516c and a panoramic image consisting of some or several frames along the horizontal direction is all at once read out.

Here, the panoramic image is composed of fifteen frames in total, that is, five frames along the horizontal direction and three frames in the vertical direction, each frame being square-shaped and consisting of 100 pixels in a horizontal scan line and 100 vertical scan lines. Accordingly, since the image display device configured as above displays an image in the state of the pendulum for each view-field angle, based on the detected information by the lens view-field angle detector, it is possible to form an exact panoramic image free from overlapping or dropout of information even when the magnitude of the view-field angle is varied.

Next, description of a second prior art example will be made on "A Monitoring System" using a camera (Japanese Patent Application Laid-Open Hei 1 No.94,787. Fig.3 is a block diagram showing an example of the monitoring system installed in a cash dispenser service corner in a bank etc. In the figure, a view of the cash dispenser service corner 601 picked up by a camera 602 is subjected to an operation in a movement detecting circuit 605 in which whether any object in the view moves is detected. If any object moving is detected, recording is started by a VTR 603 and at the same time the view is displayed on a monitor 604, so that monitoring of the cash dispenser service corner 601 can be done.

In this configuration, the movement detecting circuit 605 effects comparison of a current frame with a preceding frame, using a memory 606 and a subtraction circuit 607 so as to detect whether any object moves. If there is an object moving, the system activates the VTR 603 to record the output signal from the camera 602 whereas the VTR 603 is stopped if there is no object moving. Accordingly, the VTR 603 is activated to record only when any variations occur in the cash dispenser service corner 601.

As to the above system, "An Image Composing Apparatus" (disclosed in Japanese Patent Application Laid-Open Hei 5 No.30,422) is presented as a third prior art example. In this apparatus, since the TV camera is moved on a scanning stage by a scanning stage controller, the video image inputted from the camera moves. Hence, the system determines whether or not the image varies by detecting discrepancy between a current image and a preceding image based on data in which the movement of image by the moving scanning stage is taken into account.

Next, "A Gyrosensor Built-in Camera and A Video Printer Apparatus" (Japanese Patent Application Laid-Open Hei 6-105, 214 will be described as a fourth prior art example. Fig.4 is a perspective view showing a gyrosensor built-in camera. In this figure, a camera body 700 has a view-finder 701, a shutter button 702 and a taking lens 703. A gyrosensor 704 is provided on the top of the camera body 700. This gyrosensor recognizes the camera body 700 as a moving object and detects the movement of it. Here, the gyrosensor 704 may be incorporated inside the camera body 700.

The gyrosensor 704 has three degrees of freedom, that is, it has a capability of detecting three-dimensional variations. Three-dimensional axes of coordinates are assumed to be set up as follows: X-axis positive direction: the horizontal right-side, Y-axis positive direction: the vertical upward side, and Z-axis positive direction: a direction in which the taking lens is oriented to a subject.

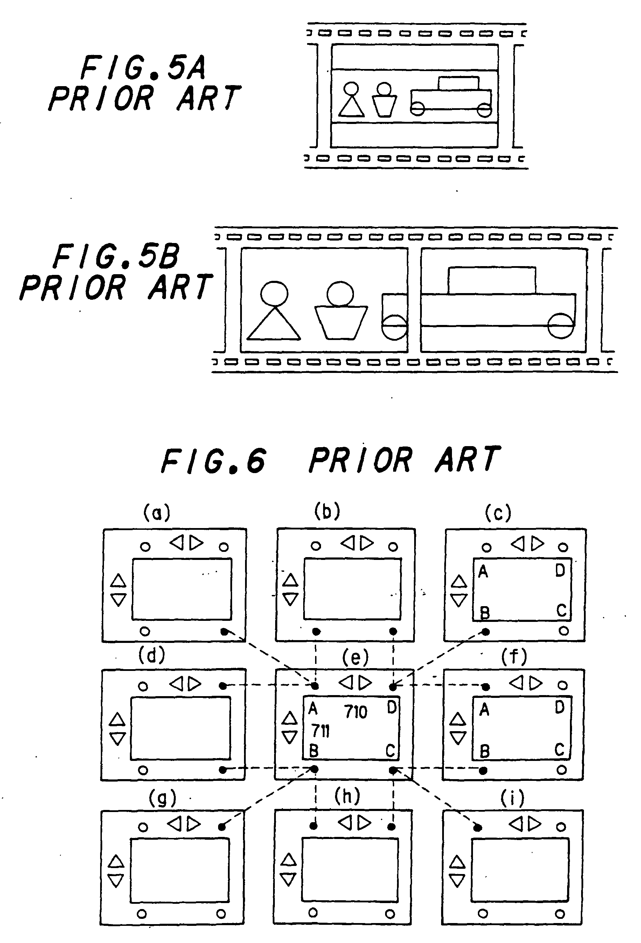

Figs.5A and 5B indicate a situation as follows: That is, a picture of a first frame in Fig. 5B is taken in a framed state shown in Fig.5A, thereafter, another picture of a second frame is taken after the camera body 700 is rotated clockwise on the Y-axis by a required angle. Thus, the pictures shown in Fig. 5B are obtained. Conversely, the second picture in Fig. 5B is taken first, thereafter the first picture may be taken after the camera body 700 is rotated on the same axis but in the counterclockwise direction by the required angle. (In this case, however, the order of the frames in Fig. 5B are replaced.) That is, if the information on the movement of the camera is known, it is possible to create panoramic pictures having more varieties.

Figs.6(a) to 6(i) indicate frame compositions which are viewed from the finder 701 of the camera of this example and can be taken thereby. Now, suppose that the camera is oriented at a position shown in Fig.6(e). In the figure, a frame of thin line in the view-finder indicates an image pickup frame while points A, B, C and D are used for informing position-matching. That is, an indicator 710 indicates a horizontal movement while another indicator 711 indicates a vertical movement, respectively.

Consider a case that a panoramic picture as shown in Figs.5A and 5B is to be taken. In this case, as the shutter button 702 is pressed, the camera automatically focuses the object to take a picture in the frame of Fig.6(e) as to be a reference frame. Next, as the camera is rotated so that the right-side frame can be taken in the view-finder, the gyrosensor 704 automatically recognizes the direction of Fig.6(f) and causes the horizontal and vertical indicators 710 and 711 to exactly instruct the user to move the camera so that the point A in the view-finder in Fig.6(f) is positioned at the point D in the view-finder in Fig.6(e) while the point B in the view-finder in Fig.6(f) is positioned at the point C in the view-finder in Fig.6(e). As the camera is moved in conformity with the instruction and positioned in place, the shutter is activated automatically or manually.

Similarly, when the camera is moved to the direction of Fig.6(c), the horizontal and vertical indicators 710 and 711 are made to instruct the user to move the camera so that the point B in the view-finder in Fig.6(c) is positioned at the point D in the view-finder in Fig.6(e). By such operations described above, it is possible to take any combination of frames as to those when the camera is vertically, horizontally or diagonally moved.

Next, a fifth prior art example "A display Device for Image-pickup" (Japanese Patent Application Laid-Open Hei 3 No.38,976) will be described. Fig.7 is a block diagram showing the display device. In the figure, a microcomputer (to be referred to hereinafter as a CPU) 811 governs the whole control of the device.

In the figure, an analog/digital (A/D) converter 813 converts the analog image signal carrying a subject image taken by an image-pickup means 812, into digital image data. The output from the converter 813 is supplied to a frame memory 814 so that the output is stored therein. Connected to the CPU 811 are the frame memory 814; a photometering device 815 for metering the brightness of a subject; a display device 816 for displaying a moving quantity of the subject image, the photo-metered point etc.; an exposure controlling unit 817; a focusing device 818 for focusing the subject; a focus-activating switch 819 for activating the focusing device 818; a spotting switch 820 for setting up the spotted light metering mode and gaining the measurement in that mode; a clear switch 821 for setting up the averaged light measuring mode from the spotted light metering mode and gaining the measurement in that mode; and a sound generator 822 for generating sounds in response to the movement of the subject as well as when the switches 819 to 821 are operated.

The image-pickup means 812 is composed of an imaging device such as, for example, CCDs, MOSs (Metal Oxide semiconductors) or the like. The CPU 811 is adapted to calculate the movement of the subject based on the digital image data stored in the frame memory 814.

In this case, the CPU 811 is adapted to read out arbitrary image data in the frame memory 814 by designating a horizontal address (XADR) and a vertical address (YADR). This CPU 811 further effect exposure calculation and focusing calculation and the like. The exposure calculation is effected based on the metered value from the photometering device 815 whereas the focusing calculation is effected based on the image data to calculate focal length to a subject.

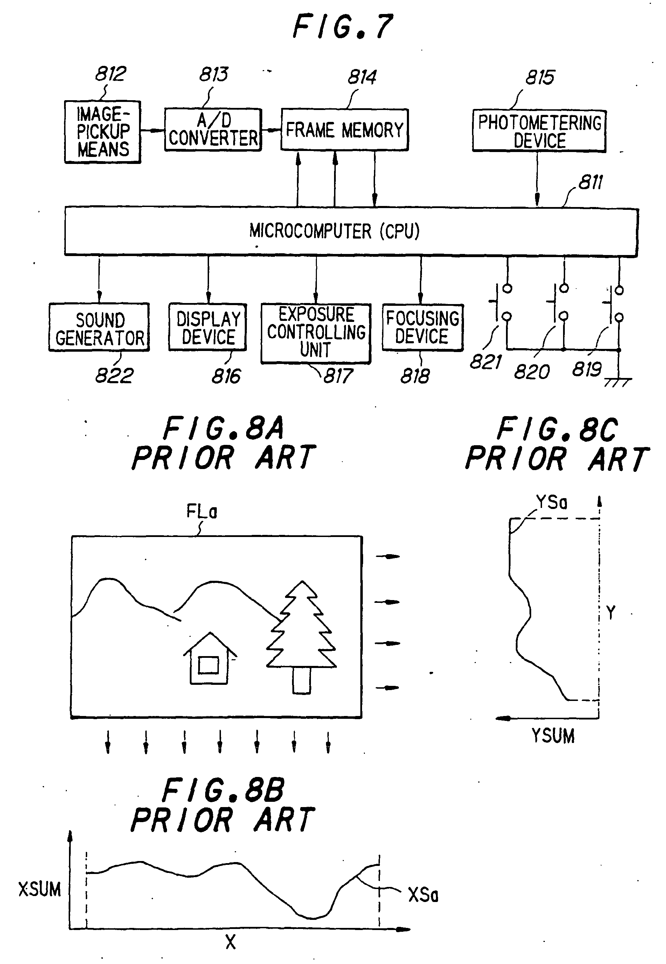

Now, a method of calculating the shift quantity of a subject by the CPU 811 will be described. Suppose that, a subject image FLa shown in Fig.8A is stored in the frame memory 814. As reading out the image data, the CPU 811 takes a summation (XSUM) of the values as to brightness signal for all the pixels along the vertical direction, for example. By this operation, one dimensional, X-spectrum of summation signal XSa is obtained.

In this case, since the subject image FLa has a dark object like a tree extending along the vertical direction, the summation signal XSa as to that portion has lower values than the level of the other areas, as seen in Fig. 8B. Subsequently, the CPU 811 takes another summation (YSUM) of the values as to brightness signal for all the pixels along the horizontal direction, for example, whereby one dimensional, Y-spectrum of summation signal YSa is obtained. In this case, since the subject image FLa has a light object like sky spreading along the horizontal direction, the summation signal XSa as to that portion has higher values than the level of the other areas, as seen in Fig.8C. The thus detected horizontal (or X-directional) summation signal XSa and vertical (or Y-directional) summation signal YSa are temporarily stored in an unillustrated memory means such as a RAM (random access memory) or the like provided in the CPU 811.

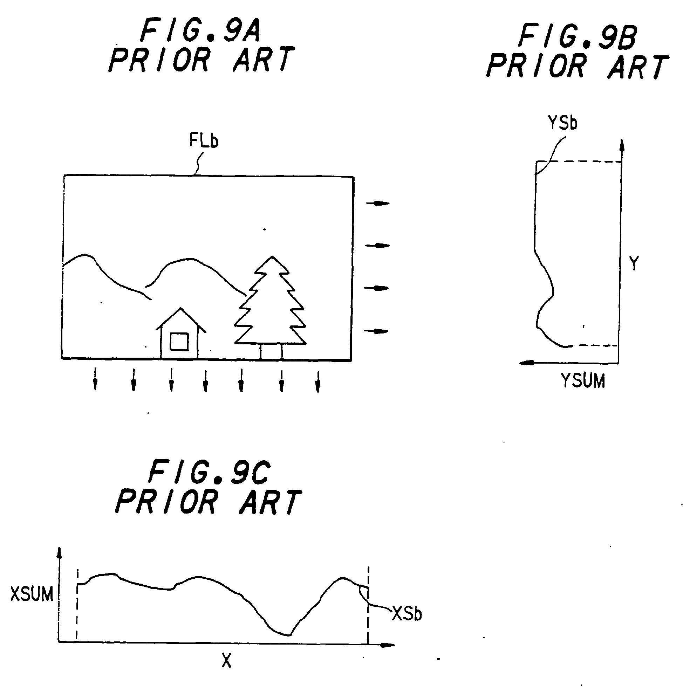

Suppose that the camera is moved right above from aforementioned position so that a subject image FLb as shown in Fig.9A is obtained. In this position, the CPU 811 similarly, detects X-directional and Y-directional summation signals XSb and YSb. In this case, the X-directional summation signal XSb and Y-directional summation signal YSb are in the forms of the spectrums shown in Figs.9B and 9C, respectively.

In this way, as the X-directional and Y-directional summation signals XSa and YSb as to the subject image FLa and the X-directional and Y-directional summation signals XSb and YSb as to the subject image FLb are detected, respectively, the CPU 811 effects a calculation of a shift quantity in the horizontal direction, for example, as to the subject image frame. That is, the CPU 811 calculates the horizontal shift quantity of the subject image frame based on the correlative operation between the two X-directional summation signals XSa and XSb. In practice, the CPU 811 successively calculates absolute differential values between the two X-directional summation signals XSa and XSb by shifting the X-directional summation signal XSb as to the subject image FLb little by little relative to the X-directional summation signal XSa as to the subject image FLa, in order to seek a minimum absolute differential value. Based on this calculation, the CPU 811 determines the quantity where the minimum value is obtained, as to be the horizontal shift quantity of the subject image frame.

In the first prior art example (Japanese Patent Application Laid-Open Sho 64 No.29,064) described heretofore, the attaching precision of the video camera to the tripod is important in order to detect an exact view-field angle. When image taking is effected by the method set forth, a video camera having a view-field angle detector of the above-described type should be used with a tripod having a pendulum detector. Accordingly, the apparatus was very costly. In order to effect exact panning/tilting operation of the video camera, it is necessary to use a rigid tripod. As a result, it was difficult to make the apparatus compact and light-weight so that this configuration was very inconvenient for being carried or moved.

In the aforementioned second prior art example (Japanese Patent Application Hei 1 No.94,787), the video image is recorded when and only when the subject image in the frame changes. Therefore, this configuration is unfavorable to be applied to a portable type video camera because the subject image changes every time when the portable video camera is used. That is, the image is always recorded every time panning and tilting are effected using the portable video camera.

In the third prior art example (Japanese Patent Application Hei 5 No.30,422), the system searches variations of the current video image from the previous video image and effects recording or data transmitting of that portion. Therefore, it is impossible to detect that the image moves by an arbitrary amount of shift and effect recording. Further, in this prior art example, the variation of the image is detected based on the movement of the scanning stage. As in this conventional configuration, after the image data between before and after movement is correlated by electrically shifting the relative position of the current data to the previous data, a new image portion, if any, is detected from the magnitude of the correlated value. In such a case, despite that the image frame is not moved, the system could erroneously detect that the image frame is changed even when an image which has nothing to do with the previous image appears suddenly in the image frame.

In the fourth conventional example described above (Japanese Patent Application Hei 6 No.105,214), a gyro is used to detect the shift quantity. A gyro is an angular speed sensor, therefore, it is possible to determine the shift-angle by calculating a product of the angular speed and the time. Nevertheless, if a lens system having a zooming mechanism which allows the view-field angle to continuously be varied is used, the shift-angle equivalent to one-image frame differs depending on the zoomed position. That is, this conventional configuration is not constructed in view of such a system having a zoom lens, so that the application of the conventional configuration to the lens system with a zoom mechanism is unfavorable.

In the fifth prior art example described above (Japanese Patent Application Hei 3 No.38,976), the moved quantity of the image-pickup frame is determined by searching a shift quantity at which the absolute differential value between the current summation signal and the previous summation signal takes a minimum value as the summation signal of the brightness signal of the current video image is shifted relative to the summation signal of the brightness signal of the previous video image. Accordingly, if a view in which, for example, several trees having similar sizes are present by approximately like distances, is taken, there appear some places where the absolute differential value takes a minimum value as the current summation signal is shifted relative to the previous summation signal in either direction. Therefore, it could become hard, in some cases, to determine in which directions the camera is shifted. Due to such an erroneous detection, the indicator for informing the operator of the moved direction could indicate an opposite direction to the direction in which the camera is actually moved or the indicator suddenly could jump irregularly. To make matters worse, it was impossible for the operator to know whether the detected data is correct or not.

The document US-A-5,233,417 discloses an image movement detection apparatus which calculates a distance between pixels forming an edge point in successive frames. The images are stored temporarily in a video memory.

The document EP-A-435 319 discloses a camera apparatus having a drift detecting unit, a two-dimensional correlating circuit for correlating a subject-image stored in memory with sequentially imaged signals, and an actuator for correcting detected drift in the apparatus.

The document EP-A-592 136, over which the present invention is characterised, discloses apparatus for producing a panoramic image by recording motion vector information together with image signals on a video tape, to allow the images reproduced from the tape to be joined together to produce a panoramic image.

SUMMARY OF THE INVENTION

It is therefore an object of the invention to provide a frame-shift detecting device which, without using a tripod with a pendulum detector, is able to precisely detect the movement of the image-pickup frame without being confused by partial movement.

It is another object of the invention to provide a video recording apparatus which is able to record and reproduce two spatially correlated frames before and after a movement by precisely detecting the movement of the image-pickup frame.

It is a third object of the invention to provide a video recording apparatus which is able to display an exact shift quantity of the image-pickup frame and a shift direction thereof on the monitor portion by precisely detecting the movement of the image-pickup frame, thus making it possible for the operator to move the image-pickup frame with precision.

Further, it is still another object of the invention to provide a video recording apparatus which is able to automatically control the rotation of the camera within a specified shift range by precisely detecting the movement of the image-pickup frame.

According to the present invention, there is provided apparatus as claimed in claim 1.

The frame-shift detecting portion in accordance with a first embodiment of the invention may comprise: an image-pickup portion outputting the video signal of picked up image frames; a movement-vector detecting portion determining a movement-vector between image frames by comparing a preceding image frame with a current image frame by a field or by a frame as a unit, the image frames being formed from the video signal from the image-pickup portion; and a frame-shift detecting portion for summing up horizontal and vertical components of the movement-vector, separately in order to detect a shift-direction or shift-quantity of the image-pickup frame from the start of counting operation.

The frame-shift detecting portion in accordance with a second embodiment of the invention may comprise: an image-pickup portion outputting the video signal of picked up image frames; a movement-vector detecting portion determining a movement-vector between image frames by comparing a preceding image frame with a current image frame by a field or by a frame as a unit, the image frames being formed from the video signal from the image-pickup portion; and a view-field shift angle calculating portion for determining a horizontal or vertical view-field shift angle, and is constructed such that the horizontal or vertical view-field shift angle is determined by the steps of: summing up horizontal or vertical components of the movement-vector, separately to determine a horizontal or vertical shift-quantity of the image-pickup frame; and calculating the shift angle in question, based on the shift-quantity, a predetermined shift quantity for one-frame and a predetermined view-field angle for one-frame.

The video recording apparatus of the present invention is featured as described heretofore; thus the following favourable results are expected.

In accordance with the frame-shift detecting portion of the first embodiment, the shift quantity of the image-pickup frame from the start of counting operation and the shift direction thereof can be determined with precision by detecting the movement of the image-pickup frame based on the video signal of the subject during image-taking to extract movement-vector data, and analysing the movement-vector data thus obtained.

Next, in accordance with the frame-shift detecting portion of the second embodiment, it is possible to determine a field-view shift angle during panning (horizontal rotation) or tilting (vertical rotation), by detecting the movement of the image-pickup frame based on the video signal of the subject during image-taking to extract movement-vector data, and analysing the movement-vector data thus obtained.

In accordance with the video recording apparatus of the invention, an actual shift quantity of the image-pickup frame from the start of counting operation and a reference shift speed of the image-pickup frame are displayed on the monitor portion, whereby it is possible for the operator to move the camera with precision by matching the shift speed in conformity with the reference indicator when the camera is to be panned or tilted.

BRIEF DESCRIPTION OF THE DRAWINGS

Fig.1 is a block diagram showing a first prior art example;
Fig.2 is a view showing an example of a display frame in the prior art example in Fig.1;

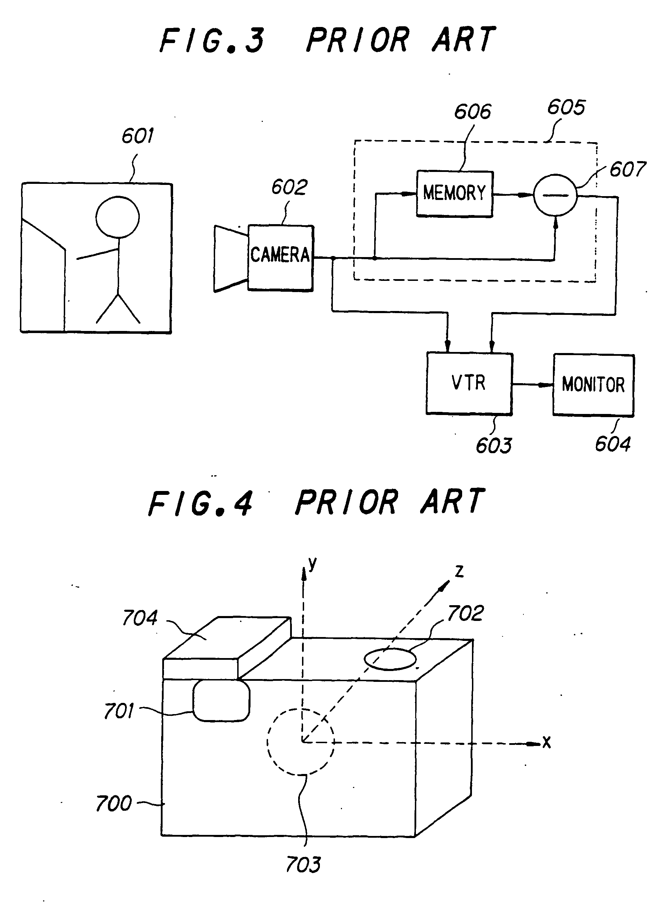

Fig. 3 is a block diagram showing a second prior art example;
Fig.4 is a perspective view showing a camera with a gyrosensor in a third prior art example;
Fig 5A is a view showing a first image frame of a film taken by the camera shown in Fig.4;
Fig.5B is a view showing a second image frame of the film which is taken by the camera shown in Fig.4 after the image of Fig. 5A;
Fig.6 is a view showing frame compositions which are viewed from the finder of the camera shown in Fig. 4 and can be taken thereby.
Fig. 7 is a block diagram showing a fifth prior art example;
Fig. 8A is a view for illustrating the detection of one-dimensional summation signal of a subject image as a reference;
Fig. 8B is a view for illustrating the detection along the vertical direction in Fig.8A;
Fig.8C is a view for illustrating the detection along the horizontal direction in Fig.8A;
Fig.9A is a view for illustrating the detection of one-dimensional summation signal of the subject image moved;
Fig. 9B is a view for illustrating the detection along the vertical direction in Fig. 9A;
Fig.9C is a view for illustrating the detection along the horizontal direction in Fig. 9A;
Fig.10 is a block diagram showing first example of a frame-shift detecting device in accordance with the invention;
Fig.11 is a block diagram of a movement-vector detecting portion shown in Fig.10
Fig. 12A is a conceptual view schematically illustrating the process of extracting representative points;
Fig. 12B is a conceptual view schematically illustrating the summation at representative points in Fig. 12A;
Fig. 13 is a block diagram showing a frame-shift detecting portion shown in Fig. 10;
Fig.14 is a flowchart for illustrating the operation of a frame-shift detecting portion shown in Fig. 10.
Fig. 15 is a block diagram showing a second example of a frame-shift detecting device in accordance with the invention;
Fig. 16 is a block diagram showing a view-field angle shift detecting portion;
Fig. 17 is a flowchart for illustrating the operation of a view-field angle shift detecting portion shown in Fig. 15;
Fig. 18A is an illustration for explaining the operation of a frame-shift detecting device shown in Fig. 15;
Fig. 18B is a view showing a frame corresponding to an angle θ1 in Fig. 18A;
Fig. 18C is a view showing a frame corresponding to an angle θ2 in Fig. 18A;
Fig. 19 is a block diagram showing a frame-shift detecting portion;
Fig. 20 is a flowchart for illustrating the operation of a frame-shift detecting portion;
Fig. 21 is a block diagram showing a third example of a video recording apparatus;
Fig. 22 is a block diagram showing a frame-shift detecting portion shown in Fig. 21;

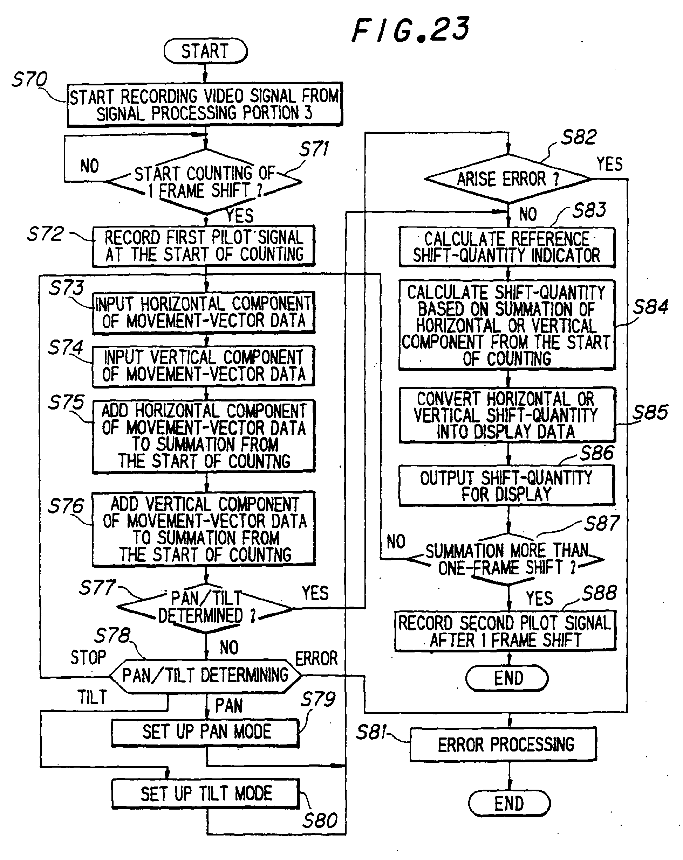

Fig. 23 is a flowchart for illustrating the operation of a frame-shift detecting portion shown in Fig. 21;
Fig. 24A is a view showing a typical reference shift indicator with an actual shift indicator displayed on a monitor portion of Fig. 21 immediately after the start of panning;
Fig. 24B is a view showing a display situation where a camera is shifted downward immediately after the start of movement;
Fig. 24C is a view showing a display situation in the course of the panning as to Fig. 24A; and
Fig. 24D is a view showing a display situation immediately before the end of panning as to Fig. 24A.

DESCRIPTION OF THE PREFERRED EMBODIMENTS

Embodiments of the invention will hereinafter be described specifically with reference to the accompanying drawings.

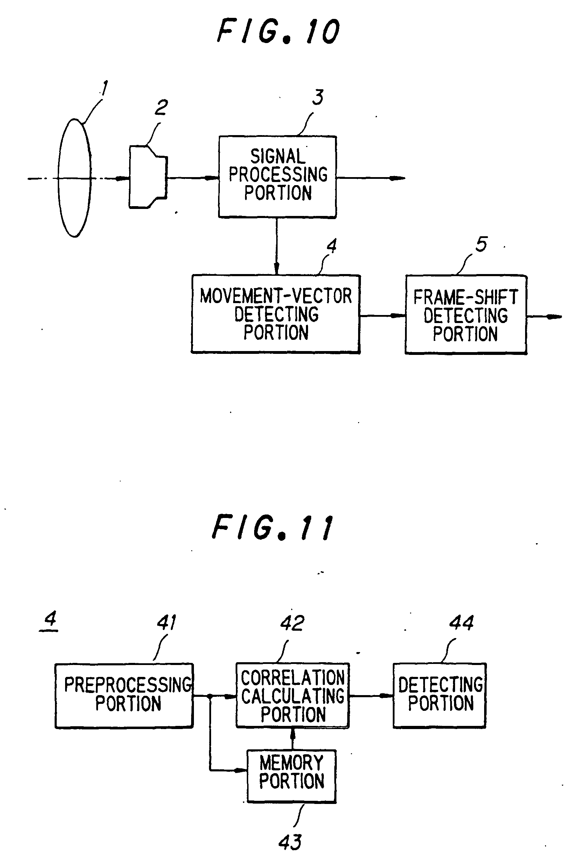

Fig. 10 is a block diagram showing a first example of a frame-shift detecting device in accordance with the invention. In this figure, light having passed through a lens 1 is photoelectrically converted into electric signals by means of a CCD imaging device 2 and the thus converted electric signal is transmitted to a signal processing, portion 3. In the signal processing portion 3, the inputted electric signal is separated into the luminance signal containing brightness information and the chromatic signal containing color information while several synchronizing signals are added to the inputted signal and the thus treated signal is outputted to a next step (not shown). The signal processing portion 3 digitally supplies luminance signals required for detecting the movement of image to a movement-vector detecting portion 4. The lens 1, the CCD imaging device 2 and the signal processing circuit 3 constitute an image-pickup unit.

The movement-vector detecting portion 4 detects a movement vector by the 'representative point matching method'. This method is carried out as follows: That is, one frame is divided into a plurality of blocks. An absolute differential value between the luminance values of the previous frame and the current frame is determined for every representative point selected one in each block. All the values for representative points are summed up over the whole frame. Based on the summation thus obtained and the previously obtained summation, two-dimensional shift quantity and the summation are analyzed to detect a movement vector.

Fig.11 is a block diagram showing the movement-vector detecting portion 4, which is composed of a preprocessing portion 41, a correlation calculating portion 42, a memory portion 43 and a detecting portion 44. The preprocessing portion 41 compensates the luminance signal from the signal processing portion 3 by interpolating one-line shift in the vertical direction between even-numbered fields and odd-numbered fields due to the interlaced scanning scheme, and reduces the high-frequency noises through a digital filter.

In the correlation calculating portion 42, the luminance signal of a previous field frame stored in the memory 43 is divided into b x c blocks each having a searching range of m x n pixels in one representative point of a single pixel is extracted from each block. Then, a luminance value $a^{n-1}_{d,e}(0,0)$ at a representative point in one of the thus divided blocks, which is designated by d-th column and e-th row are compared to a luminance value $a^n_{d,c}(i,j)$ within the searching range in the vicinity of the corresponding representative point in the current field to the above representative point in the previous field, so that an absolute differential value $\rho_{d,c}(i,j)$ between the luminance value $a^{n-1}_{d,c}(0, 0)$ and the luminance value $a^n_{d,c}(i, j)$ is calculated:

$$\rho_{d,c}(i,j) = | a^n_{d,c}(i,j) - a^{n-1}_{d,c}(0,0) | \quad \cdots \quad (1)$$

All the thus calculated $\rho_{d,c}(i,j)$ for all the representative points are summed up to determine a summation p(i,j):

$$\rho(i,j) = \Sigma_d \Sigma_e | \rho_{d,c}(i,j) | \quad \cdots \quad (2)$$

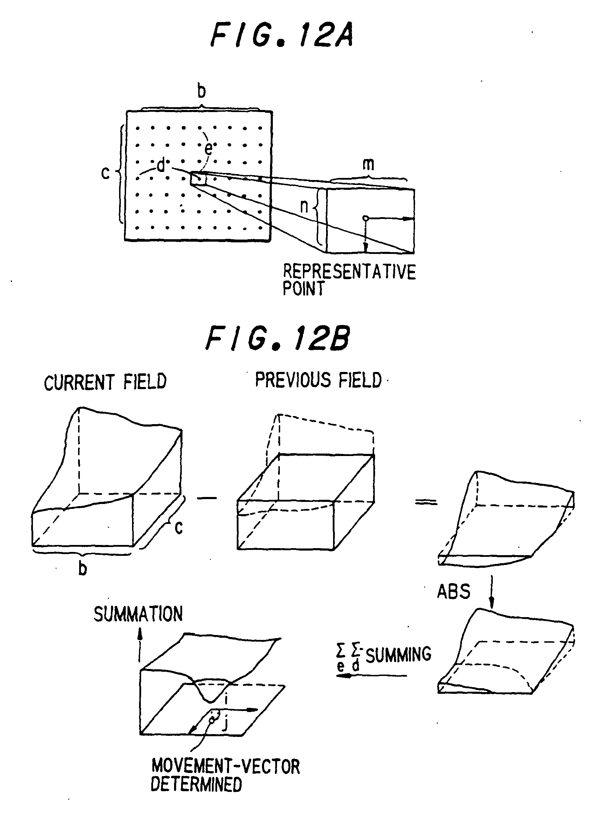

The conceptual view of this procedure can be shown in Figs. 12A and 12B.

When the correlation calculating portion 42 has completed the summation of the absolute values for a single field, the detecting portion 44 evaluates the correlation between the luminance signals of the previous field image and the current field image based on the result of the correlation calculating portion 42.

Then, the above operation is repeated for cases in which the current image is shifted by one pixel relative to the previous image to calculate a summation in the same manner. Then, similarly, the same operation is successively repeated by shifting one-pixel at a time to calculate a summation until all the searching range of m x n pixels are covered. The thus obtained summation values are repeatedly evaluated as to the correlation between the two images.

Based on the relation between the two-dimensional shift quantities and the summation values thus obtained from the above repeated operations, a displacement (i, j) at which the summation value takes the minimum value is defined as the movement vector:

$$\text{Movement vector} = (Vi, Vj)$$

$$= (i,j) |_{\rho(i,j) = \min} \quad \cdots \quad (3)$$

Nevertheless, the movement vector (Vi, Vj) thus detected by the matching method will take only integer values because the unit of the shift amount between the two images is one pixel. To make matters worse, each image has been thinned or interlaced by every two lines. That is, the detecting resolution is two-pixel length, resulting in poor accuracy.

In order to make the resolution of the movement vector more accurate, the quadratic-curve interpolation is used. That is, using the summation values around the minimum value of the summation correlation, the quadratic-curve interpolation is effected, so that the movement vector having a resolution of not more than one-pixel can be obtained. When the minimum value of the summation correlation is ρ(i,j), the compensating quantity dx in the horizontal (X-) direction is expressed as follows:

$$dx = [\{\rho(i-1,j) - \rho(i+1,j)\}/\{\rho(i-1,j) + \rho(i+1,j) - 2\rho(i,j)\}/2] \times hx \qquad \cdots(5)$$

Similarly, the compensating quantity dy in the vertical (Y-) direction is expressed as follows:

$$dy = [\{\rho(i,j-1) - \rho(i,j+1)\}/\{\rho(i,j-1) + \rho(i,j+1) - 2\rho(i,j)\}/2] \times hy \qquad \cdots(6)$$

Here, hx is two-pixel length while hy is two-pixel length (frame).

Thus, it is possible to obtain a movement vector having a detecting resolution of not more than one-pixel length, or specifically 0.25-pixel length. The thus determined movement vector is outputted as the shift quantity in the horizontal and vertical directions to the frame-shift detecting portion 5. As having completed the detection, the movement-vector detecting portion 4 outputs a signal that instructs the end of the detection. The frame-shift detecting portion 5, as receiving this signal, is activated to operate.

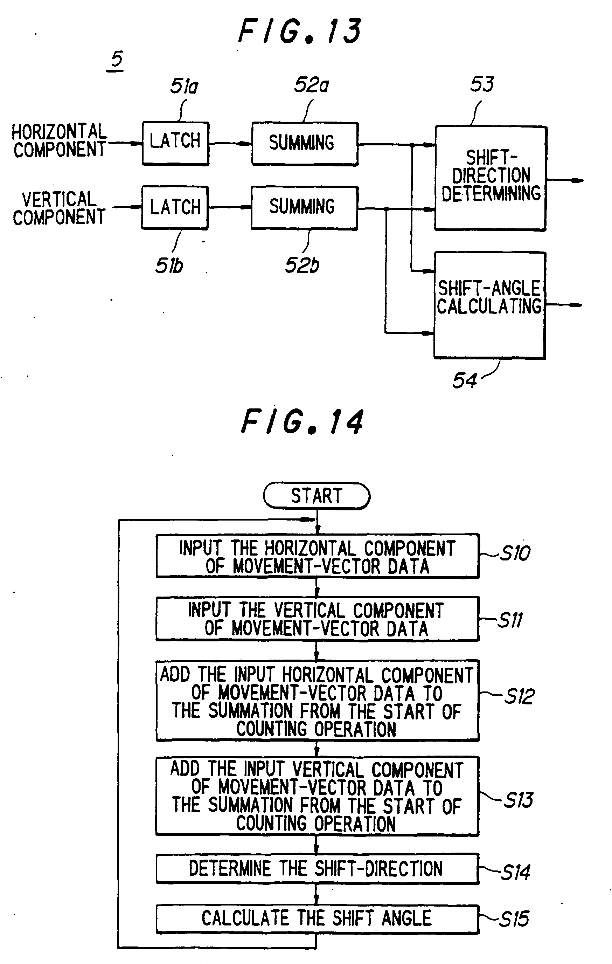

Fig.13 is a block diagram showing an embodiment of the frame-shift detecting portion 5. That is, the frame-shift detecting portion 5 includes: latch circuits 51a and 51b which separately latch the horizontal and vertical components of the movement-vector data outputted by every field from the movement-vector detecting portion 4; summing circuits 52a and 52b for separately adding the horizontal and vertical components of the latched movement-vector data to respective horizontal and vertical summations, from the start of counting operation; a shift-direction determining circuit 53 for determining a shift direction of the frame based on the summations; and a shift-angle calculating circuit 54 for calculating a shift-angle of the frame based on the same summations.

The operation of the frame-shift detecting portion 5 will be explained with reference to a flowchart shown in Fig.14. Initially, the latch circuit 51a and 51b separately latch the horizontal and vertical components of the movement-vector data outputted by every field from the movement-vector detecting portion 4 (Steps S10 and S11).

Subsequently, the horizontal component of the latched movement-vector data is added in the summing circuit 52a to the summation of the horizontal components of the movement-vector data from the start of counting operation (Step S12) while the vertical component of the latched movement-vector data is added in the summing circuit 52b to the summation of the vertical components of the movement-vector data from the start of counting operation (Step S13). The summations (totalled values) indicate shift-quantities in the horizontal and vertical directions, from the start of counting operation.

Next, the shift-direction of the frame is determined by the shift-direction determining circuit 53, from the summations (totalled values) of the horizontal and vertical components of the movement-vector data (Step S14). In this case, if both the horizontal and vertical summations are zero, the state is determined as non-movement. When the summation of the horizontal component is positive (+), the state is determined as a right-ward movement. When the summation of the vertical component is positive (+), the state is determined as an upward movement.

Accordingly, when the summations of the horizontal and vertical components are both positive (+), the state is determined as a right-upward movement; and when the summations of the horizontal and vertical components are both negative (-), the state is determined as a left-downward movement.

Further, when the horizontal summation is negative (-) while the vertical summation is positive (+), the state is determined as a left-upward movement; and when the horizontal summation is positive (+) while the vertical summation is negative (-), the state is determined as a right-downward movement.

Next, based on the magnitudes of the horizontal and vertical summations, the shift-quantities of the frame in the horizontal and vertical directions are determined, respectively. From the horizontal shift-quantity and the vertical shift-quantity, the moved angle of the frame is calculated (Step S15). For example, suppose that the summation of the horizontal components is 100 when one-frame length is shifted. If the detected summation value is 50, it is recognized that the frame is moved by one half-frame length and if the summation value is 200, it is recognized that the frame is moved by two-frame length. Similarly, the shift in the vertical direction is determined. The shift-angle detecting circuit 54 calculates the shift-angle of the frame from the thus determined horizontal and vertical shift-quantities.

Thus, it is possible to detect exact quantities of the shift of the frame, that is, the shift-quantity and shift-direction of the frame. When the thus obtained information is adapted to be displayed for example, in the view-finder of the camera, the operator, as checking the information, becomes able to move the camera by an arbitrary amount, such as one-third of the whole frame angle or by two-fifth of the whole frame angle, thus obtaining increased degrees of freedom during the image-pickup operation.

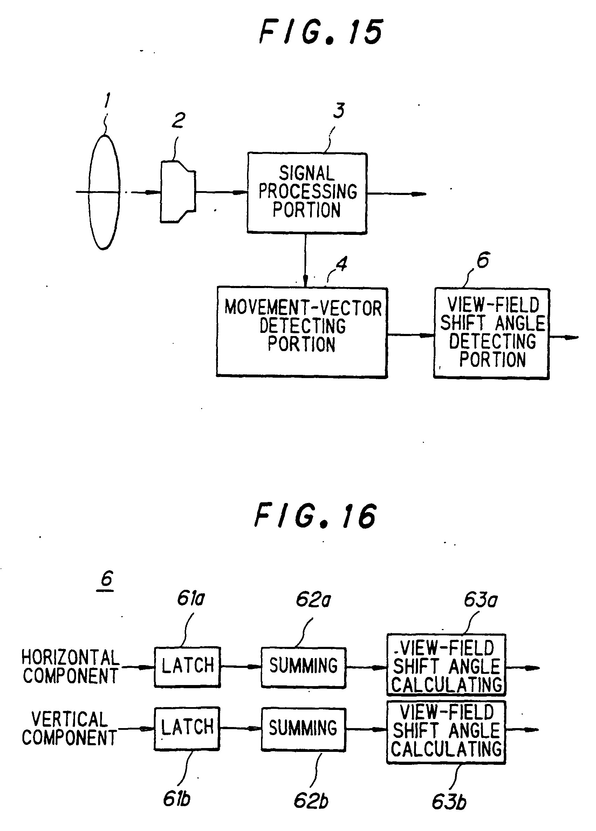

Fig.15 is a block diagram showing a second example of a frame-shift detecting device in accordance with the invention. In this figure, an image-pickup unit composed of a lens 1, a CCD imaging device 2 and a signal processing circuit 3, and a movement-vector detecting portion 4 have the same configurations and operations with those of the previous embodiment. Therefore, detailed description is omitted.

This embodiment has a view-field shift angle detecting portion 6 disposed in the downstream of the movement-vector detecting portion 4. This view-field shift angle detecting portion 6, includes, as shown in Fig.16, latch circuits 61a and 61b which separately latch the horizontal and vertical components of the movement-vector data outputted by every field from the movement-vector detecting portion 4; summing circuits 62a and 62b for separately adding the horizontal and vertical components of the latched movement-vector data to respective horizontal and vertical summations, from the start of counting operation; and view-field shift angle calculating circuits 63a and 63b for determining horizontal and vertical components of the view-field shift angle.

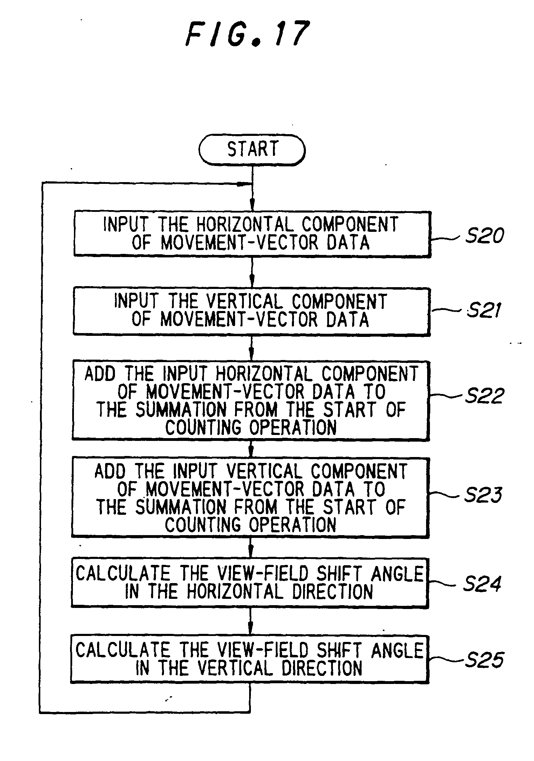

Referring next to a flowchart shown in Fig.17, the operation of the view-field shift angle detecting portion 6 will be described. First, the latch circuit 61a and 61b separately latch the horizontal and vertical components of the movement-vector data outputted by every field from the movement-vector detecting portion 4 (Steps S20 and S21).

Subsequently, the horizontal component of the latched movement-vector data is added in the summing circuit 62a to the summation of the horizontal components of the movement-vector data from the start of counting operation (Step S22) while the vertical component of the latched movement-vector data is added in the summing circuit 62b to the summation of the vertical components of the movement-vector data from the start of counting operation (Step S23). The summations indicate shift-quantities in the horizontal and vertical directions, from the start of counting operation.

Next, the view-field shift angle calculating circuit 63a calculates the horizontal view-field shift angle, from the summations of the horizontal component of the movement-vector data (Step S24) while the view-field shift angle calculating circuit 63b calculates the vertical view-field shift angle, from the summations of the vertical component of the movement-vector data (Step S25).

In this case, when the magnification of the zoom lens is fixed at a certain value, the horizontal view-field angle and vertical view-field angle for one-frame take respective predetermined values, depending upon the optical system of the lens used. For example, suppose that the horizontal view-field angle for one-frame is expressed as $\theta x°$, the vertical view-field angle for one-frame is $\theta y°$, the summation (shift quantity) of the horizontal component of the movement vector outputted from the movement-vector detecting portion 4 is Mx, the summation of the vertical components of the movement vector is My, the shift quantity when the view field is shifted by one-frame length in the horizontal direction is Px, and the shift quantity when the view field is shifted by one-frame length in the vertical direction is Py. The view-field shift angle X in the horizontal direction and the view-field shift angle Y in the vertical direction, from the time when the frame was started to move are represented as follows:

$$X = \theta x° \times (Mx / Px)$$

$$Y = \theta y° \times (My / Py).$$

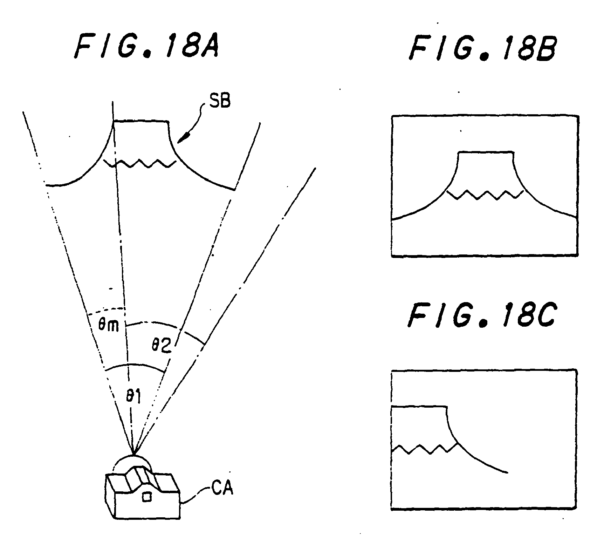

Figs.18A, 18B and 18C are illustrative views for explaining the operation of this example. Consider a case that a camera CA is panned relative to a subject SB. In this case, as shown in Fig.18A, the horizontal view-field angle before movement is represented by an angle $\theta 1$ while the horizontal view-field angle after movement is represented by an angle $\theta 2$. The frame of the angle $\theta 1$ picks up the subject SB from the front as shown in Fig.18B while the frame of the angle $\theta 2$ picks up the right-half of the subject SB as shown in Fig.18B. In this case, as the zooming magnifications are the same, the view-field angles $\theta 1$, $\theta 2$ are constant.

9

Suppose that horizontal view-field angle θx° for one-frame is 45°. In this case, if the summation value Mx of the horizontal component of the movement-vector outputted from the movement-vector detecting portion 4 is 200 and the shift quantity in the horizontal direction when one-frame length is shifted is 600, the horizontal view-field shift angle θm is calculated as follows:

$$\theta m = 45° \times (200 / 600) = 15°.$$

The vertical view-field shift angle can be calculated in the same manner. Thus, the operator can get information on the swing angle of the camera when the camera is panned or tilted during picture-taking. This feature is useful when a predetermined amount of panning or tilting is to be done.

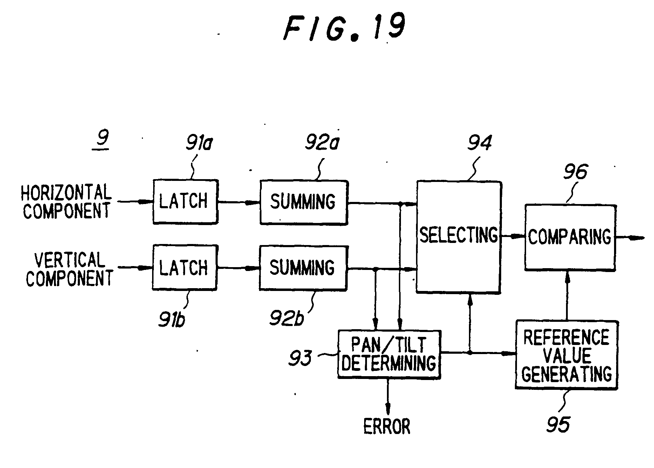

Fig. 19 is a block diagram showing an example of the frame-shift detecting portion 9. This frame-shift detecting portion 9, includes: latch circuits 91a and 91b which separately latch the horizontal and vertical components of the movement-vector data outputted by every field from the movement-vector detecting portion 4; summing circuits 92a and 92b for separately adding the horizontal and vertical components of the latched movement-vector data to respective horizontal and vertical summations, from the start of counting operation; a pan/tilt determining circuit 93 for determining whether panning and/or tilting is effected, by checking the horizontal summation and the vertical summation; a selecting circuit 94 for selecting on of the summations outputted from the summing circuits 92a and 92b, based on the result of the determination in the pan/tilt determining circuit 93; a reference value generating circuit 95 for outputting a shift-quantity for each one-frame as a reference value, based on the result of the determination in the pan/tilt determining circuit 93; and a comparing circuit 96 for comparing the summation value from the selecting circuit 94 with the reference value from the reference value generating circuit 95, thus to detect a shift for one-frame.

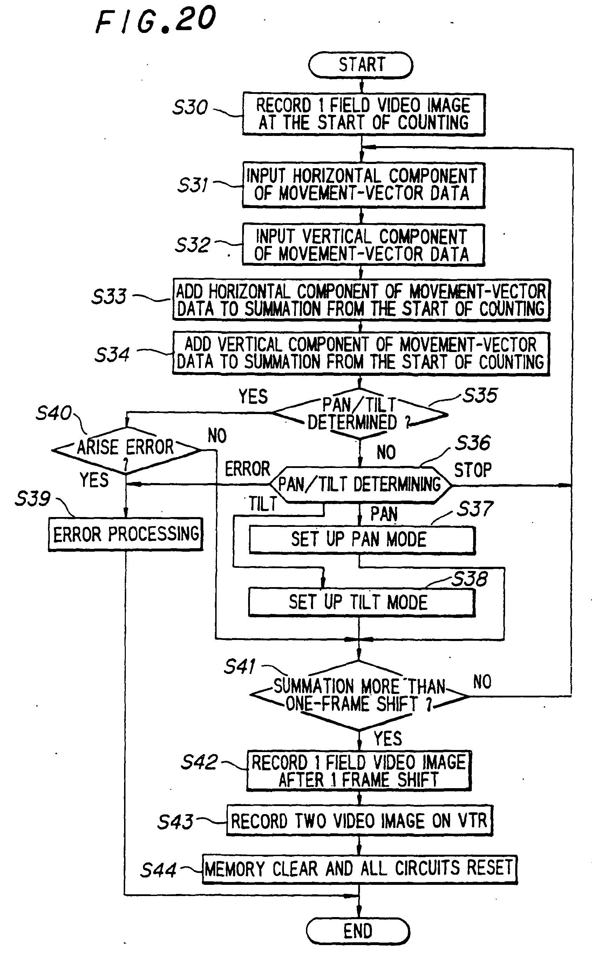

Referring next to a flowchart shown in Fig. 20, the operation of the frame-shift detecting portion 9 will be described. This process is activated when the operator designates the panorama recording mode through a control portion (not shown) in the state where the camera is being operated to take a view. First, one field of the video image at that moment is stored in an image memory in the signal processing portion 3, as an initial video image (a first video image) at the start of counting operation (Step S30). Here, the memory portion 43 in the movement-vector detecting portion 4 may commonly be used for the image memory.

Then, the latch circuit 91a and 91b separately latch the horizontal and vertical components of the movement-vector data outputted by every field from the movement-vector detecting portion 4 (Steps S31 and S32). Subsequently, the horizontal component of the latched movement-vector data is added in the summing circuit 92a to the summation of the horizontal components of the movement-vector data from the start of counting operation (Step S33) while the vertical component of the latched movement-vector data is added in the summing circuit 92b to the summation of the vertical components of the movement-vector data from of the video signals stored in the signal processing portion 3 are made clear, and all the circuits related are reset (Step S44) to end the operation.

In the above description of the example, although the video signals for both the first and the second frames were to be temporarily stored into the image memory in the signal processing portion 3 and thereafter recorded onto the VTR 7. However, the system can be configured so that the video signal for the first frame may be recorded onto the VTR 7 immediately after the signal for the first frame is stored into the image memory, thereafter the video signal for the second frame may be recorded onto the VTR 7 immediately after the signal for the second frame is stored into the image memory. This method allows saving of the image memory.

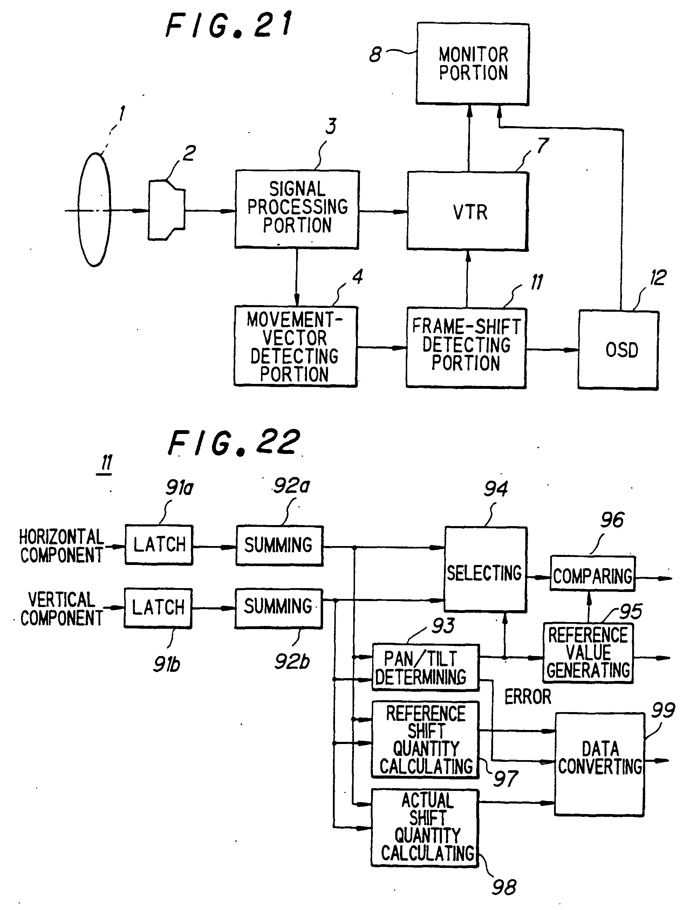

Fig. 21 is a block diagram showing an example of a video recording apparatus in accordance with the invention. In this figure, an image-pickup unit composed of a lens 1, a CCD imaging device 2 and a signal processing circuit 3, and a movement-vector detecting portion 4 have the same configurations and operations with those of the previous examples. Therefore, detailed description is omitted.

In this example, a VTR 7 is connected to the output side of the signal processing portion 3. A monitor portion 8 for displaying video image to be recorded on the VTR 7 or to be reproduced from the VTR 7 is connected to the VTR 7. Connected to the output side of the movement-vector detecting portion 4 is a frame-shift detecting portion 11. Connected to the output side of the frame-shift detecting portion 11 is an on-screen display (OSD) circuit 12. The OSD circuit 12 is a circuit for generating designated titles such as characters, marks etc., superimposed on the screen of the monitor portion 8. All the above components, or the lens 1 through the OSD circuit 12 constitute a camera-integrated VTR with a built-in monitor.

Fig. 19 is a block diagram showing an example of a frame-shift detecting portion 9. This frame-shift detecting portion 9, includes: latch circuits 91a and 91b which separately latch the horizontal and vertical components of the movement-vector data outputted by every field from the movement-vector detecting portion 4; summing circuits 92a and 92b for separately adding the horizontal and vertical components of the latched movement-vector data to respective horizontal and vertical summations, from the start of counting operation; a pan/tilt determining circuit 93 for determining whether panning and/or tilting is effected, by checking the horizontal summation and the vertical summation; a selecting circuit 94 for selecting one of the summations outputted from the summing circuits 92a and 92b, based on the result of the determination in the pan/tilt determining circuit 93; a reference value generating circuit 95 for outputting a shift-quantity for each one-frame as a reference value, based on the result of the determination in the pan/tilt determining circuit 93; and a comparing circuit 96 for comparing the summation value from the selecting circuit 94 with the reference value from the reference value generating circuit 95, thus to detect a shift for one-frame.

Referring next to a flowchart shown in Fig. 20, the operation of the frame-shift detecting portion 9 will be described. This process is activated when the operator designates the panorama recording mode through a control portion (not shown) in the state where the camera is being operated to take a view. First, one field of the video image at that moment is stored in an image memory in the signal processing portion 3, as an initial video image (a first video image) at the start of counting operation (Step S30). Here, the memory portion 43 in the movement-vector detecting portion 4 may commonly be used for the image memory.

Then, the latch circuit 91a and 91b separately latch the horizontal and vertical components of the movement-vector data outputted by every field from the movement-vector detecting portion 4 (Steps S31 and S32). Subsequently, the horizontal component of the latched movement-vector data is added in the summing circuit 92a to the summation of the horizontal components of the movement-vector data from the start of counting operation (Step S33) while the vertical component of the latched movement-vector data is added in the summing circuit 92b to the summation of the vertical components of the movement-vector data from the start of counting operation (Step S34). The summations indicate shift-quantities in the horizontal and vertical directions, from the start of counting operation.

Subsequently, whether determination of pan/tilt is made is determined by the pan/tilt determining circuit 93 (Step S35). The step is done because this embodiment is to record a panorama video picture spatially continuously in the horizontal direction or in the vertical direction by panning or tilting the camera and the following operation becomes different depending on panning or tilting.

Since, at the start of the mode, or when the camera stands still, the determination of pan/tilt has not been done, the determination of pan/tilt is effected (Step S36). In this determining process, when the absolute value of the output from the summing circuit 92a is detected to be more than a certain level and the absolute value of the output from the summing circuit 92b is detected to be not more than a certain level, the movement is determined as a panning operation, and the system sets up the panning mode (Step S37). In contrast, when the absolute value of the output from the summing circuit 92b is detected to be more than a certain level and the absolute value of the output from the summing circuit 92a is detected to be not more than a certain level, the movement is determined as a tilting operation, and the system sets up the tilting mode (Step S38).

When the absolute value of the output from the summing circuit 92a is detected to be more than a certain level and the absolute value of the output from the summing circuit 92b is detected to be more than a certain level, the camera is determined to have been moved two-dimensionally. Accordingly, in some cases depending upon the amount of the shift, the spatially continuous panoramic video taking becomes impossible, so that the system determines the operation as an error. In response to this determination, the first video image stored in the image memory is made clear and all the circuits related are reset and the error message is displayed on the monitor portion 8, to thereby end the operation (Step S39).

When the absolute values of the output from both the summing circuits 92a and 92b are both zero or not more than certain levels, the camera is determined not to have been moved yet, so that Step S31 and the following steps are repeated. In this case, if the camera has not been moved after the lapse of a predetermined time from the start of the operation, the operation is determined to be erroneous, and the process in Step S39 is effected to end the operation.

A setup operation of the panning mode (Step S37) is to cause the selecting circuit 94 to select the output from the summing circuit 92a and to cause the reference value generating circuit 95 to generate a reference value equivalent to the shift quantity of one frame length in the horizontal direction. A setup operation of the tilting mode (Step S38) is to cause the selecting circuit 94 to select the output from the summing circuit 92b and to cause the reference value generating circuit 95 to generate a reference value equivalent to the shift quantity of one frame length in the vertical direction.

In the aforementioned Step S35, if the pan/tilt determination has been already made, a judgment of whether any erroneous operation occurs is made in the pan/tilt determining circuit 93 (Step S40). This process is provided to deal with such cases that, for example, after the operation is determined as in the panning mode and the panning mode is set up, the camera is moved significantly in the vertical direction, or after the operation is determined as in the tilting mode and the tilting mode is set up, the camera is moved significantly in the horizontal direction. In any of such cases, it becomes impossible to record a panoramic video image spatially continuous. Accordingly, the error treatment is a must. When an operation is determined to be an error, the first video image stored in the image memory is made clear and all the circuits related are reset and the error message is displayed on the monitor portion 8, to thereby end the operation (Step S39).

When the setup of the panning mode (Step S37) or the tilting mode (Step S38) is complete, and if the operation is determined to be free from error in the Step S40, a judgment of whether the movement from the start of the operation is more than one-frame length is made in the comparing circuit 96 (Step S41). If the movement has not exceeded yet, the same process is repeated from Step S31 wherein the horizontal and vertical components of the movement-vector data outputted by every field from the movement-vector detection portion 4 are separately latched and summed up. Since the movement has not exceeded the one-frame length at the outset of the operation, the process from Step S31 and the following steps is effected.

In the process of Step S41, if the summation of the movement-vector data becomes equal to or greater than one-frame length, one field of the video image at that time should be stored into the image memory in the signal processing portion 3, as a second frame (an image after one-frame length is moved) (Step S42). After this operation, the VTR 7 is controlled so that the spatially continuous two frames of video signals stored in the signal processing portion 3 are recorded onto the magnetic tape for some seconds for each (Step S43). Subsequently, the two frames of the video signals stored in the signal processing portion 3 are made clear, and all the circuits related are reset (Step S44) to end the operation.

In the above description of the example, although the video signals for both the first and the second frames were to be temporarily stored into the image memory in the signal processing portion 3 and thereafter recorded onto the VTR 7. However, the system can be configured so that the video signal for the first frame may be recorded onto the VTR 7 immediately after the signal for the first frame is stored into the image memory, thereafter the video signal for the second frame may be recorded onto the VTR 7 immediately after the signal for the second frame is stored into the image memory. This method allows saving of the image memory.

Fig. 22 is a block diagram showing an example of the frame-shift detecting portion 11 shown in Fig. 21. The same components in this portion 11 with those in the frame-shift detecting portion 9 as already described are allotted with the same reference numerals and the detailed description is omitted. The frame-shift detecting portion 11 includes; latch circuits 91a, 91b, summing circuits 92a, 92b, a pan/tilt determining circuit 93, a selecting circuit 94, a reference value generating circuit 95, and a comparing circuit 96. The portion 11 further has a reference shift-quantity calculating circuit 97 and an actual shift-quantity calculating circuit 98, both connected in parallel with the pan/tilt determining circuit 93.

The reference shift-quantity calculating circuit 97 is a circuit for calculating a reference speed in order to make the operator move the frame at a speed which allows the system to detect the movement-vector data with good accuracy. The calculated reference speed data is displayed on the monitor portion 8. On the other hand, the actual shift-quantity calculating circuit 98 is a circuit for calculating an actual shift speed in order to inform the operator of the actual moving speed of the camera. The calculated actual speed data is displayed on the monitor portion 8. The output from the reference shift-quantity calculating circuit 97 as well as the output from the actual shift-quantity calculating circuit 98 is delivered to a data converting circuit 99, where the data is converted into display data instructing the display of characters, marks etc., to be outputted to the OSD 12.

Referring next to a flowchart shown in Fig.29, the operation of the frame-shift detecting portion 11 of this example will be described.

As Steps S79 and S80 are complete, or when the operation is determined to be free from error at Step S82, the reference shift-quantity calculating circuit 97 calculates a reference shift-quantity (Step S83). This calculation is done in order to make the operator move the frame of the camera at a speed which allows the system to detect the movement-vector data with good accuracy and this calculated reference speed is displayed on the monitor portion 8.

Suppose that, for example, when the movement-vector data is detected with good accuracy, the value of the movement-vector data transmitted by every field from the movement-vector detecting portion 4 is 10. In such an ideal case in which the summation is added with 10 every time a movement-vector is outputted from the movement-vector detecting portion 4, the increasing rate of the summation of the movement-vector data can be assumed to be a reference speed when the movement-vector data is detected with good accuracy.

Now, supposed that the summation of the movement-vector data when one-frame shift is made is 2,400, and when the movement-vector data can be detected with good accuracy, the value of the movement-vector data transmitted by every field from the movement-vector detecting portion 4 is 10. In this case, if 150 times of detection of the movement is made, the ideal shift can be calculated as follows:

$$10 \times 150 / 2400 = 0.625.$$

That is, this indicates a reference that if 62.5% of one-frame shift is made during 150 times of detection, the movement of the frame is carried out with good accuracy.

Next, the actual shift-quantity calculating circuit 98 calculates an actual shift quantity of the image-pickup frame by the movement of the camera from the start of counting operation (Step S84). Suppose that for instance, the summation of the movement-vector data when one-frame length has been shifted, is 2,400; if the summation of the movement-vector data is 800,

$$800 / 2400 = 0.333.$$

That is, this situation indicates that the frame has been shifted by 33.3% of one-frame length shift.

Subsequently, the previously determined reference data and the data indicating the actual shift quantity are converted in the data converting circuit 99 into display data (Step S85). The converted data is outputted to the OSD 12 (Step S86). The OSD 12 outputs character signals etc., in conformity with the converted data, to the monitor portion 8. The monitor portion 8 displays a video image based on the video signal outputted from the signal processing portion 3 with the characters and the like superimposed based on the character signals etc., outputted from the OSD 12.

Next, a judgment of whether the movement is more than one-frame length is made in the comparing circuit 96 (Step S87). If the movement has not exceeded yet, the same process is repeated from Step S73 wherein the horizontal and vertical components of the movement-vector data outputted by every field from the movement-vector detection portion 4 are separately latched and summed up.

If the summation of the movement-vector data becomes equal to or exceeds one-frame length, a pilot signal indicating that one-frame has been shifted is recorded on the magnetic tape of the VTR 7 (Step S88) in response to the output from the comparing circuit 96. Then, the operation is ended. Here, the control signal is made to also serve as the pilot signal, by changing the duty ratio of the control signal into the ratio of $80\pm5\%$ to $20\pm5\%$ as shown in Fig.25C.

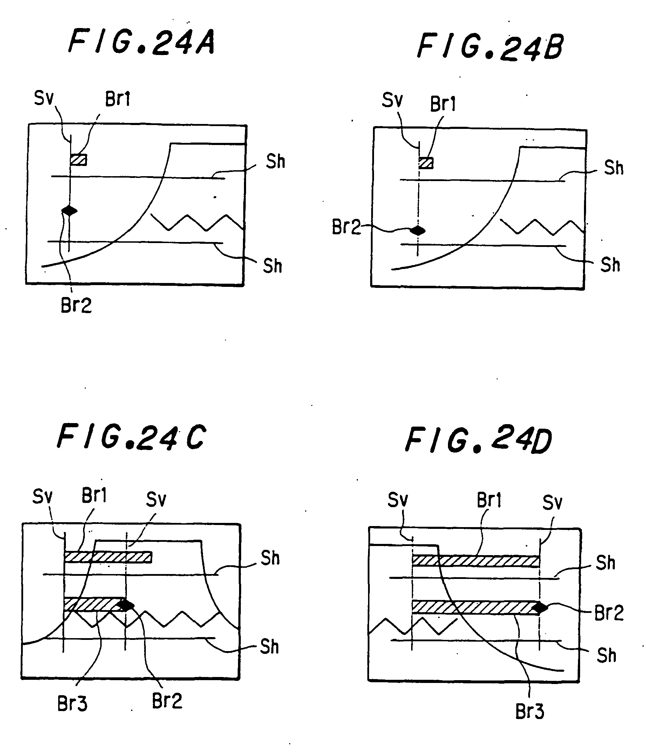

Now, an example of the reference-shift indicator and the actual-shift indicator to be displayed on the monitor portion 8 during panning will be explained with reference to Figs. 24A through 24D. Fig. 24A is a display immediately after the start of the panning. An upper bar Br1 is an indicator showing the reference-shift speed while a diamond-shaped mark Br2 is an indicator showing the actual-shift speed. Lines Sh are the horizontal references, whereas lines Sv are the vertical references. Fig. 24B shows a case where the camera is shifted downward immediately after the start of movement, therefore the diamond mark Br2 is positioned below as compared to the position in Fig. 24A. Fig. 24C is a display showing a situation in the course of panning. In this figure, the bar Br1 indicating the reference-shift speed is in advance as compared to the diamond Br2 indicating an actual-shift speed. This indicates that the actual-shift speed is delayed relative to the reference-shift speed. The operator, as checking the display, should move the camera so that the diamond Br2 may move together with the reference indicator, whereby it is possible to effect panning of the camera with precision. In the rear of the indicator Br2, another bar Br3 is displayed for the comparison with the bar Br1. Fig. 24D is a display showing a situation immediately after the shift end. The operator should stop panning of the camera when the diamond Br2 reaches this position.

For example, an image pick-up unit is composed of a lens 1, a CCD imaging device 2 and a signal processing circuit 3, and a movement-vector detecting portion 4 have the same configurations and operations with those of the previous example. Therefore, detailed description is omitted.

This example has a view-field shift angle detecting portion 13 connected to the output side of the movement-vector detecting portion 4. This view-field shift angle detecting portion 13 is to control a pan/tilt driver portion 15 within a view-field angle designated by a shift-angle specifying portion 14. This pan/tilt driver portion 15 drives the automatic panning head (APH) 16 attached to the camera.

These are the examples of the invention. In the above description of all the examples, although the 'representative point matching method' is used as the detecting technique in the movement-vector detecting portion, the present invention should not be limited to this method. Other techniques for detecting the movement-vector such as the 'gradient method', 'phase-correlation' method may of course be applied to the invention.

In the above example of the video recording apparatus, although a VTR is used as the video recording portion, the present invention is not limited to this configuration. That is, other video recording apparatuses may of course be applied to the invention, such as, for example, semiconductor memory devices including a flash memory, a non-volatile ferroelectric memory etc., magnetic recording and reproducing apparatuses using an FD (floppy disc) or the like, or magneto-optical recording and reproducing apparatuses using a CD-ROM or the like. Accordingly, the present invention should not be limited to the VTR having a built-in camera.

In the above example of the video recording apparatus, although the determination of panning or tilting is automatically done, the present invention is not limited to this configuration. The system may be constructed such that the operator may manually select a mode from the panning or tilting mode or the system may be dedicated to the panning mode or the tilting mode.

Although the above example of the video recording apparatus is constructed so that one-frame length shift in the horizontal or vertical direction is detected, the present invention is not limited to this configuration. The shift amount to be detected may of course be set at any arbitrary quantity.

Although the above example of the video recording apparatus is constructed so that the control signal is made to also serve as the pilot signal, by changing its duty ratio, the present invention is not limited to this configuration. For instance, the pilot signal can be recorded as a proper signal, into the PCM areas of 8 mm VTR, the sub-code areas of the digital VTR or etc. Further, when the invention is applied to the other video recording apparatus than VTRs, the pilot signal pertinent to the specifications of the apparatus may and should be recorded.

In accordance with the frame-shift detecting device's described above the shift quantity of the image-pickup frame from the start of counting operation can be determined with precision, based on the video signal of the frames during image-taking. Further, the view-field shift angle during panning or tilting can also be determined with precision.

In accordance with the video recording apparatus it is possible to display an exact shift quantity of the image-pickup frame by detecting the movement of the whole frame with precision. Further, an actual shift quantity of the image-pickup frame is displayed together with a reference speed at which the frame would be moved accurately. This function allows the operator to move the frame with precision. Since the apparatus can be downsized and made light-weighted, it can be easily handled for being carried and moved as well as for picture taking degrees of freedom in the image taking can be improved.

In accordance with the video recording apparatus it is possible to automatically determine whether an operation is effected in the panning or tilting mode, by detecting the shift direction of the frame. Accordingly, based on the result of the determination, it is possible to perform a pertinent process to panning or tilting.

In accordance with the video recording apparatus after the determination of whether an operation is effected in the panning or tilting mode, if any shift of the frame in a direction inconsistent with an expected direction based on the determination is detected, the movement is determined to be erroneous, whereby it is possible to quit the operation.

## Claims

1. A video recording apparatus comprising:

    an image-pickup portion (2) outputting the video signal of picked up image frames;
    a video recording portion (7) for recording said video signal by field or a frame as a unit;
    a monitor portion (8) displaying the image frame to be recorded on said video recording portion (7) ; and
    a movement-vector detecting portion (4) determining a movement-vector between image frames by comparing a preceding image frame with a current image frame by a field or by a frame as a unit, said image frames being formed from the video signal from said image-pickup portion; **characterised by**
    a frame-shift detecting portion (5; 9; 11) for summing up horizontal and vertical components of said movement-vector, separately in order to calculate a shift-direction, a shift-quantity and a reference shift speed of the image frame as well as to detect a shift-direction or shift-quantity of the image-pickup frame from the start of counting operation,

    wherein said monitor portion (8) is constructed so that based on the data from said frame-shift detecting portion (5; 9; 11), the shift quantity of the image-pickup frame from the start of counting operation, the shift direction and the reference shift speed are displayed and wherein the reference shift speed is calculated in order to make the operator move the imaging frame at a speed which allows the movement vector detection portion to detect the movement vector with good accuracy.

2. A video recording apparatus according to claim 1 wherein said frame-shift detecting portion (5; 9; 11) comprises a determining portion (93) for determining whether the image-pickup frame is moved in the horizontal direction or in the vertical direction, and based on the determination, the movement of the image-pickup frame is detected as to any one of the horizontal and vertical directions.

3. A video recording apparatus according to Claim 2 wherein said determining portion (93) determines an operation to be erroneous when, after the moving direction of the image-pickup frame is detected, the image-pickup frame is detected to be shifted in a direction inconsistent with said detected direction.

## Patentansprüche

1. Videoaufzeichnungsvorrichtung mit:

    - einem Bildaufnahmeabschnitt (2) zum Ausgeben des Videosignals aufgenommener Bildrahmen;
    - einem Videoaufzeichnungsabschnitt (7) zum Aufzeichnen des Videosignals mit Halb- oder Vollbildern als Einheit;
    - einem Überwachungsabschnitt (8) zum Anzeigen des mit dem Videoaufzeichnungsabschnitt (7) aufzuzeichnenden Bildrahmens; und

- einem Bewegungsvektor-Erfassungsabschnitt (4) zum Bestimmen eines Bewegungsvektors zwischen Bildrahmen durch Vergleichen eines vorangehenden Bildrahmens mit einem aktuellen Bildrahmen mit einem Halb- oder einem Vollbild als Einheit, wobei die Bildrahmen aus dem Videosignal vom Bildaufnahmeabschnitt erzeugt werden;

**gekennzeichnet durch**

- einen Rahmenverschiebungs-Erfassungsabschnitt (5; 9; 11) zum Aufsummieren horizontaler und vertikaler Komponenten des Bewegungsvektors auf separate Weise, um eine Verschieberichtung, ein Verschiebeausmaß und eine Referenzverschiebegeschwindigkeit des Bildrahmens zu berechnen und eine Verschieberichtung oder ein Verschiebeausmaß des Bildaufnahmerahmens ab dem Beginn eines Zählvorgangs zu erfassen;

- wobei der Überwachungsabschnitt (8) so aufgebaut ist, dass auf Grundlage der Daten vom Rahmenverschiebungs-Erfassungsabschnitt (5; 9; 11) das Verschiebeausmaß des Bildaufnahmerahmens ab dem Beginn des Zählvorgangs, die Verschieberichtung und die Referenzverschiebegeschwindigkeit angezeigt werden, und wobei die Referenzverschiebegeschwindigkeit berechnet wird, um den Bediener dazu zu veranlassen, den Bilderzeugungsrahmen mit einer Geschwindigkeit zu bewegen, die es dem Bewegungsvektor-Erfassungsabschnitt ermöglicht, den Bewegungsvektor mit guter Genauigkeit zu erfassen.

2. Videoaufzeichnungsvorrichtung nach Anspruch 1, bei der der Rahmenverschiebe-Erfassungsabschnitt (5; 9; 11) einen Ermittlungsabschnitt (93) zum Ermitteln, ob sich der Bildaufnahmerahmen in der horizontalen oder in der vertikalen Richtung bewegt, aufweist, wobei, auf Grundlage der Ermittlung, die Bewegung des Bildaufnahmerahmens als eine solche in der horizontalen oder der vertikalen Richtung erfasst wird.

3. Videoaufzeichnungsvorrichtung nach Anspruch 2, bei der der Ermittlungsabschnitt (93) eine Operation als fehlerhaft ermittelt, wenn, nach dem Erfassen der Bewegungsrichtung des Bildaufnahmerahmens, erkannt wird, dass derselbe in einer Richtung verschoben wird, die nicht mit der erfassten Richtung übereinstimmt.


**Revendications**

1. Appareil d'enregistrement vidéo comprenant:

une partie formant capteur d'images (2) qui délivre en sortie le signal vidéo de trames d'images captées;
une partie d'enregistrement vidéo (7) pour enregistrer ledit signal vidéo demi-trame par demi-trame ou trame par trame;
une partie formant écran de contrôle (8) pour afficher la trame d'image à enregistrer dans ladite partie d'enregistrement vidéo (7); et
une partie de détection de vecteur de mouvement (4) qui détermine un vecteur de mouvement entre trames d'image en comparant une trame d'image précédente à une trame d'image actuelle, demi-trame par demi-trame ou trame par trame, lesdites trames d'image étant formées à partir du signal vidéo en provenance de ladite partie formant capteur d'images;

**caractérisé par**:

une partie de détection de décalage de trame (5; 9; 11) servant à additionner les composantes horizontale et verticale dudit vecteur de mouvement, de façon séparée afin de calculer une direction de décalage, une quantité de décalage et une vitesse de décalage de référence de la trame d'image ainsi que pour détecter une direction de décalage ou une quantité de décalage de la trame d'image captée, à partir du début de l'opération de comptage,

dans lequel ladite partie formant écran de contrôle (8) est construite de telle sorte que, sur la base des données en provenance de ladite partie de détection de décalage de trame (5; 9; 11), la quantité de décalage de la trame d'image captée à partir du début de l'opération de comptage, la direction de décalage et la vitesse de décalage de référence sont affichées, et dans lequel la vitesse de décalage de référence est calculée afin d'amener l'opérateur à déplacer la trame d'image à une vitesse permettant à la partie de détection de vecteur de mouvement de détecter le vecteur de mouvement avec une bonne précision.

2. Appareil d'enregistrement vidéo selon la revendication 1, dans lequel ladite partie de détection de décalage de trame (5; 9; 11) comprend une partie de détermination (93) servant à déterminer si la trame d'image captée est déplacée dans la direction horizontale ou dans la direction verticale, et, sur la base de la détermination, le déplacement de la trame d'image captée est détecté relativement à l'une quelconque des directions horizontale et verticale.

3. Appareil d'enregistrement vidéo selon la revendication 2, dans lequel ladite partie de détermination (93) détermine qu'une opération est erronée lorsque, une fois que la direction de déplacement de la trame d'image captée a été détectée, la trame d'image captée est détectée comme étant décalée dans une direction incompatible avec ladite direction détectée.

# FIG.1 PRIOR ART

# FIG.2 PRIOR ART

# FIG.3  PRIOR ART

# FIG.4  PRIOR ART

# FIG.5A
## PRIOR ART

# FIG.5B
## PRIOR ART

# FIG.6   PRIOR ART

(a)

(b)

(c)

A       D

B       C

(d)

(e)

A   710   D

711

B       C

(f)

A       D

B       C

(g)

(h)

(i)

# FIG.7

812 IMAGE-PICKUP MEANS

813 A/D CONVERTER

814 FRAME MEMORY

815 PHOTOMETERING DEVICE

811 MICROCOMPUTER (CPU)

SOUND GENERATOR 822

DISPLAY DEVICE 816

EXPOSURE CONTROLLING UNIT 817

FOCUSING DEVICE 818

821  820  819

# FIG.8A
# PRIOR ART

# FIG.8C
# PRIOR ART

FLa

YSa

Y

YSUM

# FIG.8B
# PRIOR ART

XSUM

XSa

X

## FIG.9A
## PRIOR ART

FLb

## FIG.9B
## PRIOR ART

YSb

Y

YSUM

## FIG.9C
## PRIOR ART

XSUM

XSb

X

# FIG. 10

# FIG. 11

# FIG. 12A

b

c

d

e

m

n

REPRESENTATIVE
POINT

# FIG. 12B

CURRENT FIELD          PREVIOUS FIELD

c

b

—          =

ABS

$\sum\limits_{e}\sum\limits_{d}$ SUMMING

SUMMATION

i

j

MOVEMENT-VECTOR
DETERMINED

23

# FIG. 13

# FIG. 14

# FIG. 15

1

2

3 SIGNAL PROCESSING PORTION

4 MOVEMENT-VECTOR DETECTING PORTION

6 VIEW-FIELD SHIFT ANGLE DETECTING PORTION

# FIG. 16

6

61a

62a

63a

HORIZONTAL COMPONENT → LATCH → SUMMING → VIEW-FIELD SHIFT ANGLE CALCULATING →

VERTICAL COMPONENT → LATCH → SUMMING → VIEW-FIELD SHIFT ANGLE CALCULATING →

61b

62b

63b

# FIG. 17

```
                    ┌─────────────┐
                    │    START    │
                    └─────────────┘
                           │
  ┌────────────────────────┼─────────────────────────┐
  │  ┌──────────────────────────────────────────┐     │
  │  │   INPUT THE HORIZONTAL COMPONENT         │─── S20
  │  │      OF MOVEMENT-VECTOR DATA             │     │
  │  └──────────────────────────────────────────┘     │
  │                        │                           │
  │  ┌──────────────────────────────────────────┐     │
  │  │    INPUT THE VERTICAL COMPONENT          │─── S21
  │  │      OF MOVEMENT-VECTOR DATA             │     │
  │  └──────────────────────────────────────────┘     │
  │                        │                           │
  │  ┌──────────────────────────────────────────┐     │
  │  │ ADD THE INPUT HORIZONTAL COMPONENT       │     │
  │  │     OF MOVEMENT-VECTOR DATA TO           │─── S22
  │  │  THE SUMMATION FROM THE START OF         │     │
  │  │          COUNTING OPERATION              │     │
  │  └──────────────────────────────────────────┘     │
  │                        │                           │
  │  ┌──────────────────────────────────────────┐     │
  │  │  ADD THE INPUT VERTICAL COMPONENT        │     │
  │  │     OF MOVEMENT-VECTOR DATA TO           │─── S23
  │  │  THE SUMMATION FROM THE START OF         │     │
  │  │          COUNTING OPERATION              │     │
  │  └──────────────────────────────────────────┘     │
  │                        │                           │
  │  ┌──────────────────────────────────────────┐     │
  │  │ CALCULATE THE VIEW-FIELD SHIFT ANGLE     │─── S24
  │  │      IN THE HORIZONTAL DIRECTION         │     │
  │  └──────────────────────────────────────────┘     │
  │                        │                           │
  │  ┌──────────────────────────────────────────┐     │
  │  │ CALCULATE THE VIEW-FIELD SHIFT ANGLE     │─── S25
  │  │       IN THE VERTICAL DIRECTION          │     │
  │  └──────────────────────────────────────────┘     │
  │                        │                           │
  └────────────────────────┴───────────────────────────┘
```

*FIG.18A*

*FIG.18B*

*FIG.18C*

# FIG. 19

## FIG.20

START

S30 — RECORD 1 FIELD VIDEO IMAGE AT THE START OF COUNTING

S31 — INPUT HORIZONTAL COMPONENT OF MOVEMENT-VECTOR DATA

S32 — INPUT VERTICAL COMPONENT OF MOVEMENT-VECTOR DATA

S33 — ADD HORIZONTAL COMPONENT OF MOVEMENT-VECTOR DATA TO SUMMATION FROM THE START OF COUNTING

S34 — ADD VERTICAL COMPONENT OF MOVEMENT-VECTOR DATA TO SUMMATION FROM THE START OF COUNTING

YES ← PAN/TILT DETERMINED ? S35

S40 — ARISE ERROR ? — NO

NO

S36 STOP
ERROR — PAN/TILT DETERMINING — STOP

YES

S39 — ERROR PROCESSING

TILT

PAN S37 — SET UP PAN MODE

S38 — SET UP TILT MODE

S41 — SUMMATION MORE THAN ONE-FRAME SHIFT ? — NO

YES

S42 — RECORD 1 FIELD VIDEO IMAGE AFTER 1 FRAME SHIFT

S43 — RECORD TWO VIDEO IMAGE ON VTR

S44 — MEMORY CLEAR AND ALL CIRCUITS RESET

END

# FIG. 21

```
                          ┌──────────┐
                        8 │ MONITOR  │
                          │ PORTION  │
                          └──────────┘
   1        2      ┌────────────┐   ┌────────┐
                3  │  SIGNAL    │   │        │  7
  ( )──▶ ⬡ ────▶ │ PROCESSING │──▶│  VTR   │
                   │  PORTION   │   │        │
                   └────────────┘   └────────┘
                         │               ▲
                         ▼               │
              ┌────────────┐  ┌────────────┐  ┌──────┐
            4 │ MOVEMENT-  │  │FRAME-SHIFT │ 11│      │ 12
              │  VECTOR    │─▶│ DETECTING  │─▶│ OSD  │
              │ DETECTING  │  │  PORTION   │  │      │
              │  PORTION   │  └────────────┘  └──────┘
              └────────────┘
```

# FIG. 22

<u>11</u>

```
                 91a        92a                      94              96
HORIZONTAL    ┌───────┐  ┌─────────┐            ┌──────────┐   ┌───────────┐
COMPONENT ───▶│ LATCH │─▶│ SUMMING │──────┬───▶│SELECTING │──▶│ COMPARING │──▶
              └───────┘  └─────────┘      │    └──────────┘   └───────────┘
VERTICAL      ┌───────┐  ┌─────────┐      │          93            ▲  95
COMPONENT ───▶│ LATCH │─▶│ SUMMING │──────┤  ┌──────────────┐  ┌───────────┐
              └───────┘  └─────────┘      │  │   PAN/TILT   │  │ REFERENCE │
                 91b        92b           ├─▶│ DETERMINING  │  │   VALUE   │──▶
                                          │  └──────────────┘  │GENERATING │
                                          │         ERROR      └───────────┘
                                          │  ┌──────────────┐
                                          │  │  REFERENCE   │
                                          ├─▶│    SHIFT     │      ┌───────────┐  99
                                          │  │   QUANTITY   │─────▶│   DATA    │
                                          │  │ CALCULATING  │  97  │CONVERTING │──▶
                                          │  └──────────────┘      └───────────┘
                                          │  ┌──────────────┐
                                          │  │   ACTUAL     │
                                          └─▶│    SHIFT     │
                                             │   QUANTITY   │
                                             │ CALCULATING  │
                                             └──────────────┘
                                                    98
```

# FIG.23

START

S70 — START RECORDING VIDEO SIGNAL FROM SIGNAL PROCESSING PORTION 3

S71 — START COUNTING OF 1 FRAME SHIFT ? — NO / YES

S72 — RECORD FIRST PILOT SIGNAL AT THE START OF COUNTING

S73 — INPUT HORIZONTAL COMPONENT OF MOVEMENT-VECTOR DATA

S74 — INPUT VERTICAL COMPONENT OF MOVEMENT-VECTOR DATA

S75 — ADD HORIZONTAL COMPONENT OF MOVEMENT-VECTOR DATA TO SUMMATION FROM THE START OF COUNTNG

S76 — ADD VERTICAL COMPONENT OF MOVEMENT-VECTOR DATA TO SUMMATION FROM THE START OF COUNTNG

S77 — PAN/TILT DETERMINED ? — YES / NO

S78 — PAN/TILT DETERMINING — STOP / TILT / PAN / ERROR

S79 — SET UP PAN MODE

S80 — SET UP TILT MODE

S82 — ARISE ERROR ? — YES / NO

S83 — CALCULATE REFERENCE SHIFT-QUANTITY INDICATOR

S84 — CALCULATE SHIFT-QUANTITY BASED ON SUMMATION OF HORIZONTAL OR VERTICAL COMPONENT FROM THE START OF COUNTING

S85 — CONVERT HORIZONTAL OR VERTICAL SHIFT-QUANTITY INTO DISPLAY DATA

S86 — OUTPUT SHIFT-QUANTITY FOR DISPLAY

S87 — SUMMATION MORE THAN ONE-FRAME SHIFT ? — NO / YES

S88 — RECORD SECOND PILOT SIGNAL AFTER 1 FRAME SHIFT

END

S81 — ERROR PROCESSING

END

## FIG.24A

## FIG.24B

## FIG.24C

## FIG.24D